(19) Europäisches Patentamt
European Patent Office
Office européen des brevets

(11) **EP 1 914 994 A1**

(12) **EUROPEAN PATENT APPLICATION**

(43) Date of publication:
**23.04.2008 Bulletin 2008/17**

(51) Int Cl.:
**H04N 7/26** (2006.01)

(21) Application number: **06021734.6**

(22) Date of filing: **17.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicants:
• **Mitsubishi Electric Information Technology Centre**
**Europe B.V.**
**The Surrey Research Park**
**Guildford**
**Surrey GU2 7YD (GB)**
Designated Contracting States:
**GB**
• **MITSUBISHI DENKI KABUSHIKI KAISHA**
**Chiyoda-ku, Tokyo 100-8310 (JP)**
Designated Contracting States:
**AT BE BG CH CY CZ DE DK EE ES FI FR GR HU IE IS IT LI LT LU LV MC NL PL PT RO SE SI SK TR**

(72) Inventors:
• **Paschalakis, Stavros**
**Surrey GU1 2LT (GB)**
• **Simmons, Daniel**
**Hampshire RG27 9JT (GB)**

(74) Representative: **HOFFMANN EITLE**
**Patent- und Rechtsanwälte**
**Arabellastrasse 4**
**81925 München (DE)**

(54) **Detection of gradual transitions in video sequences**

(57)     A technique is disclosed for detecting gradual transitions between frames of a video sequence such as fade and dissolve transitions. For each frame, the intensity values of pixels at corresponding positions within a window of frames including the subject frame are compared, and signs are allocated to the calculated differences. The number of each type of sign is determined for each pixel position and the larger number of matching signs is assigned as a measure of the monotonicity of the direction of intensity variations at the pixel position between the frame and the surrounding frames. A global monotonicity measure is then calculated for the frame as a whole using the monotonicity values for each pixel position. This is repeated for each frame to generate a temporal sequence of frame intensity change monotonicity measures. Slopes within this temporal sequence representative of gradual transitions between video frames are detected. Alternatively, the values in the temporal sequence are compared with a threshold to identify values representative of gradual transitions between video frames.

FIG. 2

**Description**

This invention relates to the detection of gradual transitions between frames of a digital video sequence and, in particular, but not exclusively, the detection of fade and dissolve gradual shot transitions.

In recent years there has been a sharp increase in the amount of digital video data that consumers have access to and keep in their video libraries. These videos may take the form of commercial DVDs and VCDs, personal camcorder recordings, off-air recordings onto HDD and DVR systems, video downloads on a personal computer or mobile phone or PDA or portable player, and so on. This growth of digital video libraries is expected to continue and accelerate with the increasing availability of new high capacity technologies such as Blu-Ray and HD-DVD. However, this abundance of video material is also a problem for users, who find it increasingly difficult to manage their video collections. To address this, new automatic video management technologies are being developed that allow users efficient access to their video content and functionalities such as video categorisation, summarisation, searching and so on.

The realisation of such functionalities relies on the analysis and understanding of the individual videos. In turn, the first step in the analysis of a video is almost always its structural segmentation, and in particular, the segmentation of the video into its constituent shots. This step is very important, since its performance will have an impact on the quality of the results of any subsequent video analysis steps.

A shot is typically defined as the video segment captured between the "Start Recording" and "Stop Recording" operation of a camera. A video is then put together as a sequence of many shots. For example, an hour of a TV programme will typically contain somewhere in the region of 1000 shots. There are various ways in which shots are put together in the editing process in order to form a complete video. The simplest mechanism is to simply append shots, whereby the last frame of one shot is immediately followed by the first frame of the next shot. This gives rise to an abrupt shot transition, commonly referred to as a "cut". There are also more complicated mechanisms for joining shots, using gradual shot transitions which last for a number of frames. A common example of a gradual shot transition is the fade, whereby the intensity of a shot gradually drops, ending at a black monochromatic frame (fade-out), or the intensity of a black monochromatic frame gradually increases until the actual shot becomes visible at its normal intensity (fade-in). Fades to and from black are more common, but fades involving monochromatic frames of other colours are also used. Another example of a gradual shot transition is the dissolve, which can be envisaged as a combined fade-out and fade-in. A dissolve involves two shots, overlapping for a number frames, during which time the first shot gradually dims and the second shot becomes gradually more distinct.

In general, abrupt transitions are much more common than gradual transitions, accounting for over 99% of all transitions found in video. Therefore, the correct detection of abrupt shot transitions is very important, and is examined in our co-pending patent applications EP 1 640 914 A2 and EP 1 640 913 A1. On the other hand, the detection of gradual transitions is also very important, since such transitions have a high semantic significance. For example, fades and dissolves are commonly used to indicate the passage of time or change of scene in a story. Therefore, various researchers have proposed methods for the detection of fade and dissolve transitions.

In Truong, B. T., Dorai, C., Venkatesh, S., "New Enhancements to Cut, Fade and Dissolve Processes in Video Segmentation", In Proceedings of the 2000 8th ACM International Conference on Multimedia, pp. 219-227, Nov. 2000, a method is presented for the detection of fade transitions in video, which proceeds as follows. First, monochromatic frames are detected in the video. Then, a search is performed for negative spikes in the $2^{nd}$ order difference curve of the frame luminance variance curve around each monochromatic frame sequence. Such spikes usually represent the start of a fade-out or the end of a fade-in, but may also be caused by motion. Such false alarms are eliminated by observing that the $1^{st}$ order difference curve of the frame luminance mean curve remains relatively constant and does not change its sign during a fade. Since motion can also distort the mean feature, this $1^{st}$ order difference curve is smoothed before performing the sign check. Then, fade-outs are differentiated from fade-ins by observing that the variance curve decreases during a fade-out and increases during a fade-in. There is also a requirement that the variance of the staring frame of a fade-out and the ending frame of a fade-in be above a certain threshold, in order to eliminate false positives caused by dark shots. A difficulty with this method is that it relies heavily on the correct detection of monochromatic frames. For example, for fast fades there may be very few monochromatic or near-monochromatic frames, and they can be difficult to detect, resulting in missed fade transitions. Conversely, certain video segments, such as dark scenes, commonly cause false monochromatic frame detections. Combined with the fact that the conditions on the frame luminance variance and mean curves and their derivatives are not satisfied solely by the presence of fade transitions, but also by other common events such as motion, these false monochromatic frame detections commonly result in subsequent false fade detections. Imposing a limit on the fade-in (out) ending (starting) frame variance in order to eliminate false detections caused by dark scenes may help, but it also limits the ability of the method to detect actual fades in dark scenes.

In the aforementioned work by Truong et al., a method is also presented for the detection of dissolve transitions in video. With that method, the existence of dissolves is triggered by zero crossing sequences in the $1^{st}$ order difference curve of the frame luminance variance curve, whereby the start value is below a negative threshold, then continuously increases, and then the end value is above a positive threshold. In order to reduce the effect of noise and motion, the curve is smoothed before searching for zero crossing sequences. However, due to this smoothing operation, the positions of the negative and positive peaks on the difference curve caused by a dissolve no longer coincide with their actual positions. Therefore, the positions are adjusted by moving the position of the negative peak backward until the difference value increases beyond a negative threshold and moving the position of the positive peak forward until the difference value drops below a positive threshold. Since the variance curve has a parabolic shape during a dissolve, the frame n at which the minimum value should be obtained may be found, and additional conditions relating to the variance at start frame s, end frame e, frame n and to the component shot variances may be derived. A limitation of this approach is that it operates under certain constraints, namely that the variances of the component shots of the dissolve exceed a threshold and that the duration of the dissolve never exceeds a certain length, with a recommended maximum length of two seconds. Regarding the first constraint, this will lead to misses of valid dissolves. As for the second constraint, in general, the imposition of such an artificial limit will also result in misses. In particular, a maximum length of two seconds is inadvisable, since we found that dissolves commonly exceed that duration.

In US 5,990,980 "Detection of Transitions in Video Sequences", another method is presented for the detection of fade and dissolve transitions. With that method, frame dissimilarity measure (FDM) values are generated for pairs of frames in a video sequence that are separated by a specified timing window size. Each FDM value is calculated as the ratio of the net dissimilarity $D_{net}$ between the two frames and a cumulative dissimilarity $D_{cum}$, calculated as the sum of the $D_{net}$ values for frame pairs between the aforementioned two frames. $D_{net}$ and $D_{cum}$ may be calculated, for example, as frame histogram differences or pixel-wise frame differences. Then, peaks in the FDM data that exceed a certain first threshold indicate a transition, and FDM values on either side of the peak that fall below a certain second threshold indicate the bounds of the transition.

Various methods that detect fades and dissolves in the compressed domain have also been proposed. In US 6,327,390 B1 "Methods of Scene Fade Detection for Indexing of Video Sequences", a method is disclosed for the detection of fade transitions in compressed video without decompression. The premise of that method is that during a fade, most P-frame blocks will have a DC correction term. For a fade-in, the DC correction terms will be mostly positive, while for a fade-out they will be mostly negative. A typical fade interval, e.g. one second, is assumed, during which frames must be consistently fade-in frames or fade-out frames for the respective transition to be declared. In US 2001/0021267 A1 "Method of Detecting Dissolve/Fade in MPEG-compressed Video Environment", a method is disclosed for the detection of both fade and dissolve transitions in compressed video without decompression With that method, a candidate sequence that is presumed to contain a fade or dissolve is initially detected using a shot transition detection method, e.g. by comparing the histograms of distant frames. Then, for the candidate sequence, the spatio-temporal macroblock type distribution of B-frames adjacent to anchor frames is examined to ascertain whether it matches the distributions that characterise fades and dissolves. If such a match is found, the length of the potential transition is compared with a predetermined critical value and the transition is declared if it exceeds that critical value. Both this method and the aforementioned method in US 6,327,390 B1 are appealing for the fact that they do not require decompression of the video, but this fact is also a limiting factor, since it makes the methods applicable only to videos compressed in a certain manner.

It should be noted that gradual transitions between shots of a video sequence are not the only type of gradual transitions which may exist in a video sequence and require detection. For example, gradual transitions resulting from special effects may also occur between frames, and it is important to be able to detect these types of gradual transitions as well.

According to the present invention, there is provided a method of detecting a gradual temporal transition between frames in a video sequence, comprising:

processing each of a plurality of frames in the sequence to determine therefore a measure of the uniformity of the direction of intensity variations between the frame and other frames in the sequence; and

processing the resulting temporal sequence of uniformity measure values to detect a gradual temporal transition between frames in the video sequence.

The present invention also provides a method of detecting a gradual temporal transition between image data in frames of a video sequence, comprising:

processing each of a plurality of frames in the sequence to:

- compare the intensity values of pixels within the frame with the intensity values of pixels in at least one other frame in the sequence to generate intensity difference values; and

- determine the sign of each intensity difference value;

- determine the number of each type of sign for each of a plurality of pixel positions across a plurality of frames in a window including the frame; and

- determine a measure of the uniformity of the direction of intensity variations between the frame and other frames in the window in dependence upon the determined numbers of each type of sign; and

processing the uniformity measures calculated for the plurality of frames by performing at least one of slope detection to detect slopes in the values of the uniformity measures and threshold comparison to detect uniformity measures having a value in excess of a threshold.

As a result of these features, uniformity measures indicative of a gradual transition between frames can be detected.

It should be noted that, as used herein, the term "intensity" refers to any pixel value such as a red, green or blue colour component value, a luminance value, or a chrominance value etc.

The present invention also provides respective apparatus having components for performing the methods above.

The present invention further provides a computer program product carrying computer program instructions to program a programmable processing apparatus to become operable to perform a method as set out above.

Embodiments of the invention will now be described, by way of example only, with reference to the accompanying drawings, in which:

Figure 1 schematically shows the components of an embodiment of the invention, together with the notional functional processing units into which the processing apparatus component may be thought of as being configured when programmed by computer program instructions;

Figure 2 shows the processing operations performed by the processing apparatus in Figure 1 to calculate a measure of the monotonicity of the direction of intensity variations between each frame in a video sequence and a plurality of other frames in the sequence;

Figure 3 shows a plot of a temporal sequence of measures of the monotonicity of the direction of intensity variations for a typical fade transition;

Figure 4 shows a plot of a temporal sequence of measures of the monotonicity of the direction of intensity variations for a typical dissolve transition; and

Figure 5 shows the processing operations performed by the processing apparatus in Figure 1 to detect slopes within a temporal sequence of measures of the monotonicity of the direction of intensity variations.

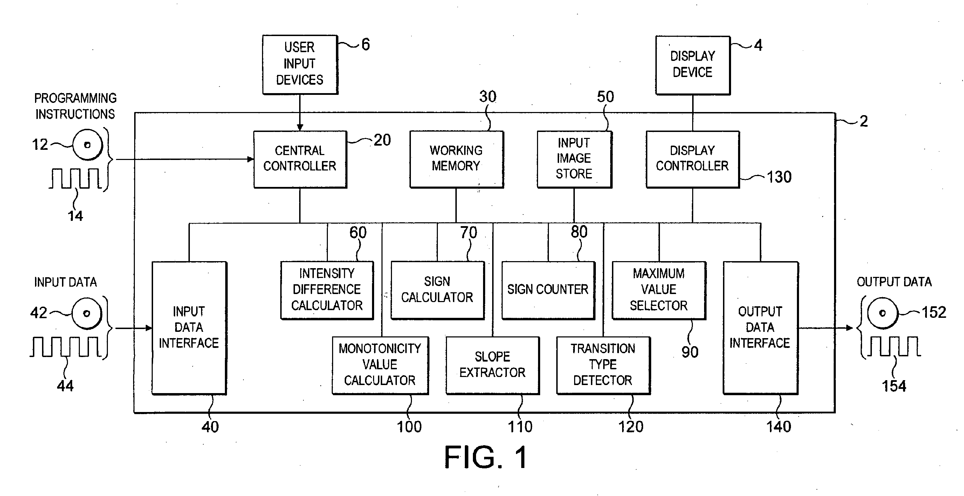

Referring to FIG. 1, an embodiment of the invention comprises a programmable processing apparatus 2, such as a personal computer (PC), containing, in a conventional manner, one or more processors, memories, graphics cards etc, together with a display device 4, such as a conventional personal computer monitor, and user input devices 6, such as a keyboard, mouse etc.

The processing apparatus 2 is programmed to operate in accordance with programming instructions input, for example, as data stored on a data storage medium 12 (such as an optical CD ROM, semiconductor ROM, magnetic recording medium, etc), and/or as a signal 14 (for example an electrical or optical signal input to the processing apparatus 2, for example from a remote database, by transmission over a communication network (not shown) such as the Internet or by transmission through the atmosphere), and/or entered by a user via a user input device 6 such as a keyboard.

As will be described in more detail below, the programming instructions comprise instructions to program the processing apparatus 2 to become configured to process frames of video to detect fade and dissolve transitions by calculating a temporal intensity change monotonicity (that is, uniformity) measure $M_i$ based on a multiplicity of frame-to-frame comparisons in a neighbourhood of each frame, and detecting positive and negative slopes in the sequence $M_i$ as indicative of gradual shot transition start and end points respectively.

As will be understood from the following description, the embodiment provides a new method and apparatus for detecting fade and dissolve transitions in video, which

- is a unified method for the detection of fades and dissolves, with an optional step for distinguishing between the different types,

- - does not rely on the prior detection of monochromatic frames,

- - makes no assumptions about the length of the transition,

- - has a high detection performance at different frame resolutions, including DC and sub-DC in the context of compressed video,

- - has a high detection performance regardless of the scene content, not being limited by dark scenes or bright scenes or scenes with little texture, such as a shot of the sky.

When programmed by the programming instructions, processing apparatus 2 can be thought of as being configured as a number of functional units for performing processing operations. Examples of such functional units and their interconnections are shown in FIG. 1. The units and interconnections illustrated in FIG. 1 are, however, notional, and are shown for illustration purposes only to assist understanding; they do not necessarily represent units and connections into which the processor, memory etc of the processing apparatus 2 actually become configured.

Referring to the functional units shown in FIG. 1, central controller 20 is operable to process inputs from the user input devices 6, and also to provide control and processing for the other functional units. Memory 30 is provided for use by central controller 20 and the other functional units.

Input data interface 40 is operable to control the storage of input data within processing apparatus 2. The data may be input to processing apparatus 2 for example as data stored on a storage medium 42, as a signal 44 transmitted to the processing apparatus 2, or using a user input device 6.

In this embodiment, the input data comprises data defining a sequence of video images.

Input image store 50 is configured to store the sequence of video images input to processing apparatus 2.

Intensity difference calculator 60 is operable to compare intensity values of pixels at corresponding spatial positions in different video frames to calculate the difference between the intensity values.

Sign calculator 70 is operable to process the difference values generated by intensity difference calculator 60 to determine the sign of each difference in accordance with a predetermined sign function.

Sign counter 80 is operable to calculate the number of difference values having each respective sign assigned by sign calculator 70. More particularly, sign counter 80 is operable to determine the number of difference values of positive sign, and the number of difference values of negative sign for each pixel location and each type of pixel intensity value compared by intensity difference calculator 60.

Maximum value selector 90 is operable to select the largest number from the number of difference values having a positive sign and the number of difference values having a negative sign. That is, maximum value selector 90 is operable to select the larger number of matching signs for each pixel location and each type of pixel intensity value compared by intensity difference calculator 60.

Monotonicity value calculator 100 is operable to calculate a local measure of the monotonicity of the direction of intensity variations for each pixel in a video frame neighbourhood, and is further operable to calculate a global measure of the monotonicity of the direction of intensity variations for each video frame as a whole.

Slope extractor 110 is operable to detect positive and negative slopes in a temporal sequence of global monotonicity values calculated by monotonicity value calculator 100.

Transition type detector 120 is operable to determine whether a monochromatic frame is present at the start or end of a detected transition, thereby enabling the type of transition to be determined.

Display controller 130, under the control of central controller 20, is operable to control display device 4 to display video frames input to processing apparatus 2.

Output data interface 140 is operable to control the output of data from processing apparatus 2. In this embodiment, the output data defines the positions, and optionally the types, of gradual transitions detected in the video frames.

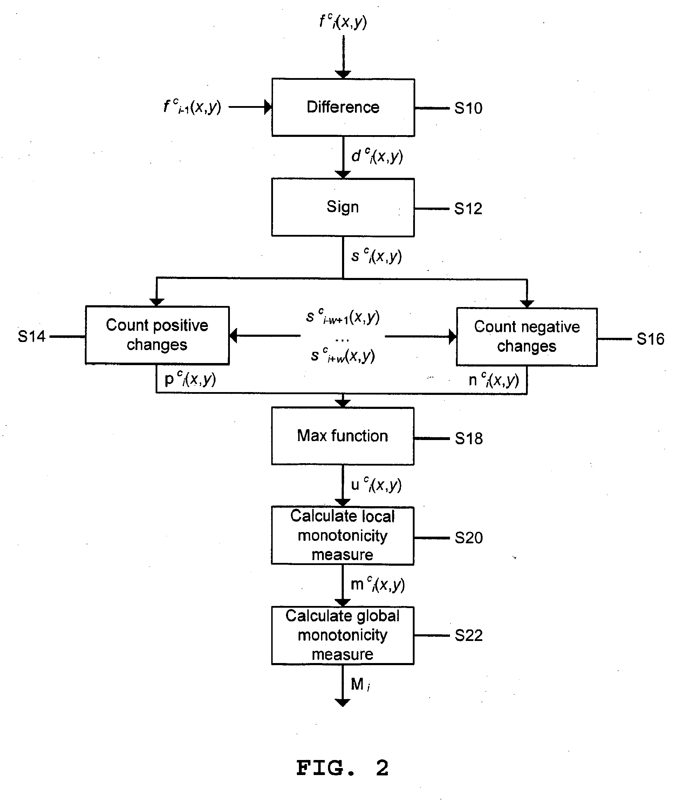

FIG. 2 shows the processing operations performed by processing apparatus 2 to process a sequence of video frames in this embodiment.

Referring to FIG. 2, processing is performed for a video frame sequence

$$f_i^c(x,y) \text{ with } i \in [0, T-1], \quad c \in \{C_1, \ldots, C_K\}, \quad x \in [0, M-1], \quad y \in [0, N-1] \qquad (1)$$

where $i$ is the frame index, $T$ is the total number of frames in the video, $c$ is the colour channel index, $C_1 \ldots C_K$ are the colour channels and $K$ is the number of colour channels, e.g. $\{C_1, C_2, C_3\} = \{R, G, B\}$ or $\{C_1, C_2, C_3\} = \{Y, C_b, C_r\}$, $x$ and $y$ are spatial coordinates (thereby defining pixel positions in the frame) and $M$ and $N$ are the horizontal and vertical frame dimensions respectively.

At step S10, intensity difference calculator 60 calculates the difference d between each frame and the previous frame as

$$d_i^c(x,y) = f_i^c(x,y) - f_{i-1}^c(x,y) \qquad (2)$$

Thus, $d_i^c(x, y)$ represents the difference in the intensity values of pixels at position $(x, y)$ in frame $i$ for colour channel $c$, where "intensity" refers to any pixel value such as an R, G or B colour component value, a luminance value (y) or a chrominance value $C_b$ or $C_r$, etc. (with the particular type of pixel value being determined by the colour channel $c$ in the equation).

Then, at step S12, sign calculator 70 calculates the sign function $s$ as

$$s_i^c(x,y) = \begin{cases} +1 & \text{if } d_i^c(x,y) > 0 \\ 0 & \text{if } d_i^c(x,y) = 0 \\ -1 & \text{if } d_i^c(x,y) < 0 \end{cases} \qquad (3)$$

The detection of fade and dissolve transitions relies on a local temporal intensity change monotonicity measure $m_i$. In simple terms, $m_i$ is a measure of the consistency of the direction of the intensity variations between frames in the neighbourhood of frame $f_i$. Thus, $m_i$ is calculated in each colour channel and spatial location of $f_i$ by examining the pattern of intensity changes in the temporal neighbourhood of $f_i$, i.e. for the frames $[f_{i-w}, f_{i+w}]$ in the temporal window of size $2w+1$. More particularly, in this embodiment of the invention, $m_i$ is calculated as follows. First, at steps S14, S16 and S18 the measures $p_i$, $n_i$ and $u_i$ are calculated by sign counter 80 and maximum value selector 90 as

$$p_i^c(x,y) = \sum_{j=-w+1}^{w} \frac{\left| s_{i+j}^c(x,y) \right| + s_{i+j}^c(x,y)}{2} \qquad (4)$$

$$n_i^c(x,y) = \sum_{j=-w+1}^{w} \frac{\left| s_{i+j}^c(x,y) \right| - s_{i+j}^c(x,y)}{2} \qquad (5)$$

$$u_i^c(x,y) = \max\left( p_i^c(x,y), n_i^c(x,y) \right) \qquad (6)$$

In effect $p_i^c(x,y)$ measures the number of positive signs, therefore intensity increases, in the temporal neighbourhood of frame $f_i$ for colour channel $c$ and spatial location $(x,y)$. Similarly, $n_i^c(x,y)$ measures the number of negative signs, therefore intensity decreases, while $u_i^c(x,y)$ measures the larger number of matching signs, be they positive or negative.

At step S20, the local temporal intensity change monotonicity measure $m_i$ is then calculated by monotonicity value calculator 100 as

$$m_f^c(x,y) = \begin{cases} u_i^c(x,y) & \text{if } u_i^c(x,y) > \varphi \\ 0 & \text{otherwise} \end{cases} \qquad (7)$$

where $\varphi$ is a threshold. The present inventors have found that a good threshold is $\varphi = 4w/3$ where, as set out above, $w$ controls the frame temporal window size. In simple terms, $m_f^c(x,y)$ is equal to the larger number of matching signs observed at location $(x,y)$ of channel $c$, if said number is sufficiently large and significant in relation to the temporal window size, or 0, if not. For example, for $w=7$, which the present inventors have found to be a good value for the detection of gradual transitions, the temporal window contains seven frames, giving six frame comparisons, and as a result it is possible to have at most six matching signs, positive (monotonic intensity increase) or negative (monotonic intensity decrease). Then, according to equation (7), $m_f^c(x,y)$ takes values in $\{0,5,6\}$.

At step S22, a global temporal intensity change monotonicity measure $M_i$ for frame $f_i$ is then calculated by monotonicity value calculator 100 as

$$M_i = \sum_{c,x,y} m_f^c(x,y) \qquad (8)$$

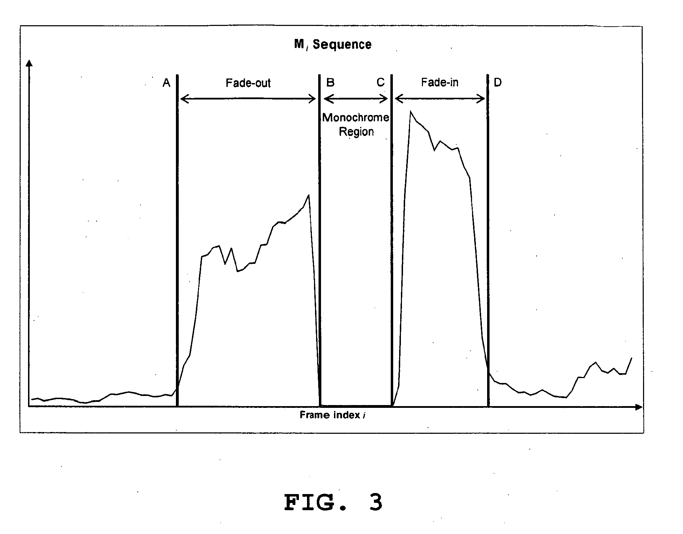

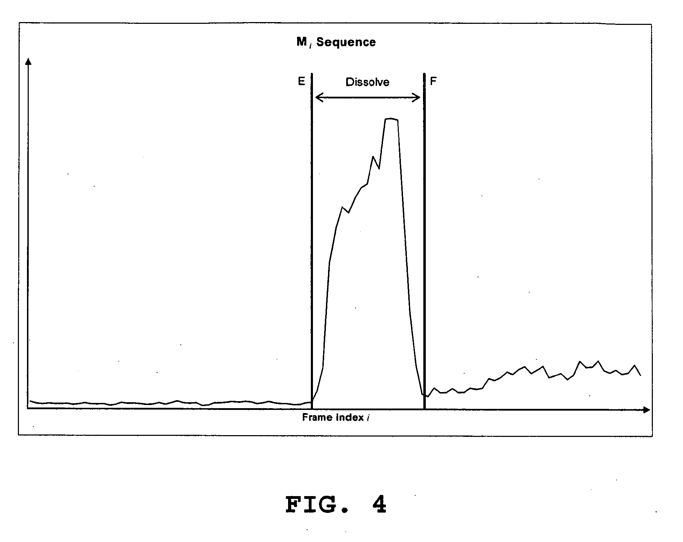

FIGS. 3 and 4 show plots of $M_i$ against $i$ for typical fade and dissolve transitions. In FIG. 3, points A and B are the start and end points of a fade-out, while C and D are the start and end points for a fade-in. In FIG. 4, E and F are that start and end points of a dissolve. Thus, it is evident that the sequence $M_i$ exhibits a positive slope at the beginning of a fade or dissolve transition, then remains at high values for the duration of the transition, and then exhibits a negative slope at the end of the transition. This is due to the fact that, during a fade or dissolve, the majority of the frame intensity values in the shots will converge, over a number of frames and with some degree of consistency, to their new values. Thus, the detection of fades and dissolves becomes a problem of detecting the positive and negative slopes in $M_i$.

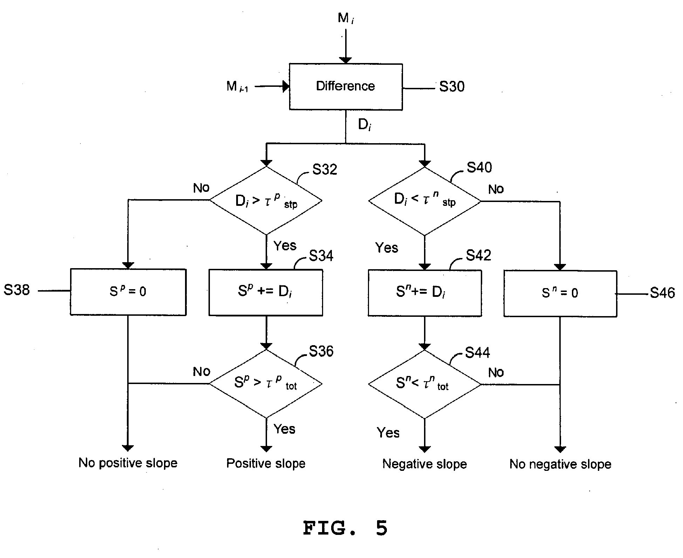

The detection of such slopes could be achieved, for example, by processing a derivative of $M_i$. The processing performed by slope extractor 110 to detect such slopes in this embodiment of the invention is illustrated in FIG. 5.

Referring to FIG. 5, at step S30 the difference series $D_i$ is calculated as

$$D_i = M_i - M_{i-1} \qquad (9)$$

Then, at steps S32-S38 a positive slope between frame indices $\alpha$ and $\beta$ is detected when

$$D_i > \tau_{stp}^p \quad \forall i \in [\alpha,\beta] \qquad \text{and} \qquad S^p = \sum_{i=\alpha}^{\beta} D_i > \tau_{tot}^p \qquad (10)$$

where $\tau_{stp}^p$ and $\tau_{tot}^p$ are step and total increase thresholds respectively. Similarly, at steps S40-S46, a negative slope between $\alpha$ and $\beta$ is detected when

$$D_i < \tau_{stp}^n \quad \forall i \in [\alpha,\beta] \qquad \text{and} \qquad S^n = \sum_{i=\alpha}^{\beta} D_i < \tau_{tot}^n \qquad (11)$$

where $\tau_{stp}^n$ and $\tau_{tot}^n$ are step and total increase thresholds respectively.

In a preferred embodiment of the invention, the sequence $M_i$ will undergo some smoothing prior to the detection of the positive and negative slopes. It should also be noted that, occasionally, certain video characteristics, such as fast motion and illumination changes in a shot, may result in one of the slopes for a valid transition being less pronounced and more difficult to detect. In the event that the above slope detection process misses such a slope, the detection of the transition may be based on the steepness of the other slope and a default transition length.

Other approaches towards detecting the positive and negative slopes in $M_i$, such as linear regression, may also be appropriate, but will entail an increased computational complexity.

In this embodiment, transition type detector 120 is provided to perform processing to disambiguate fade-in, fade-out and dissolve transitions. More particularly, in this embodiment, transition type detector 120 determines whether the transition begins with or ends at a monochromatic frame or not. Note that, unlike previously reported methods which rely on monochromatic frame detection for the detection of the transitions, this embodiment uses the technique only for disambiguation of transitions, hence any errors on the part of this monochromatic frame detection process will not result in a missed transition or a falsely detected transition. One possibility towards the detection of monochromatic frames is to calculate the intra-frame intensity variance for a number of frames either side of a detected transition and require this variance measure to be below a threshold for monochromatic frames to be detected. The drawback of such an approach is the increased computational complexity that the variance calculations entail. Accordingly, in this embodiment, transition type detector 120 detects monochromatic frames directly from $M_i$ which, as can be seen from an examination of Fig. 3 between points B and C, attains near-zero or zero values for monochromatic frame sequences. In contrast, such low values are not typically observed for normal video frames, even when there is very little motion, except where there are freeze-frame sequences.

Many modifications and variations can be made to the embodiment above. For example, equations (2)-(8) are just one example of the calculation of the local and global temporal intensity change monotonicity measures $m_i$ and $M_i$. In alternative embodiments of the invention, different techniques may be used. For example, equation (3) can be replaced by

$$s_i^c(x,y) = \begin{cases} +1 & \text{if } d_i^c(x,y) > \theta^p \\ 0 & \text{if } \theta^p \geq d_i^c(x,y) \geq \theta^n \\ -1 & \text{if } d_i^c(x,y) < \theta^n \end{cases} \qquad (12)$$

where the thresholds $\theta^p$ and $\theta^n$ ensure that small intensity fluctuations, caused by noise or compression and the like, do not corrupt the subsequent calculations. Furthermore, the absolute value of the intensity increase and decrease $P_i$ and $N_i$ may also be measured as

$$P_i^c(x,y) = \sum_{j=-w+1}^{w} \left( \frac{\left|s_{i+j}^c(x,y)\right| + s_{i+j}^c(x,y)}{2} \cdot \left|d_{i+j}^c(x,y)\right| \right) \qquad (13)$$

$$N_i^c(x,y) = \sum_{j=-w+1}^{w} \left( \frac{\left|s_{i+j}^c(x,y)\right| - s_{i+j}^c(x,y)}{2} \cdot \left|d_{i+j}^c(x,y)\right| \right) \qquad (14)$$

Then, $m_i$ may be calculated as a function of $p_i$ and $n_i$, as shown in equations (4) and (5), and $P_i$ and $N_i$, as shown above. For example

$$m_i^c(x,y) = \begin{cases} p_i^c(x,y) & \text{if } p_i^c(x,y) \geq n_i^c(x,y) \text{ and } p_i^c(x,y) > \varphi \text{ and } P_i^c(x,y)/N_i^c(x,y) > \omega \text{ and } P_i^c(x,y) > \xi \\ n_i^c(x,y) & \text{if } n_i^c(x,y) \geq p_i^c(x,y) \text{ and } n_i^c(x,y) > \varphi \text{ and } N_i^c(x,y)/P_i^c(x,y) > \omega \text{ and } N_i^c(x,y) > \xi \\ 0 & \text{otherwise} \end{cases}$$

$$(15)$$

where $\varphi$, $\omega$ and $\xi$ are thresholds. Thus, equation (15) is similar to equation (4), but in (15) the intensity increase and decrease amounts are also taken into consideration in the calculation of $m_i$.

Furthermore, in the embodiment previously described every frame in the video is processed for the calculation of the measures. In alternative embodiments of the invention, different temporal step sizes may be used, resulting in the processing of every second frame or every third frame and so on, resulting in the accelerated processing of the video. Also, in the embodiment previously described the local temporal intensity change monotonicity measure $m_i$ for a frame $f_i$ is calculated in a frame temporal neighbourhood of size $2w+1$ centred on $f_i$. In alternative embodiments of the invention, the said neighbourhood can assume any size and need not be centred on $f_i$. Furthermore, in the embodiment previously described, all the colour channels of the video frames are used for the calculation of the measures. In alternative embodiments of the invention, only a subset of the channels may be used, or the $m_i$ values in each channel may be weighted according to their colour channel in the calculation of the global temporal intensity change monotonicity measure $M_i$.

In the embodiment previously described, the local monotonicity measure $m_i$ is calculated for every pixel position $(x, y)$ in the video frames and the global monotonicity measure $M_i$ is calculated for the whole of each frame taking into account $m_i$ for every pixel position. However, instead, the pixel positions for only a portion of each frame could be used, such as the centre portion of each frame. Such processing could provide advantages for example when the frames are widescreen video frames in which black bars at the edges of each frame are encoded as part of the frame.

Furthermore, it will be obvious to a person skilled in the art that, for each colour channel $c$, $m_i^c(x,y)$ is a two-dimensional signal. Thus, for each colour channel $c$, this signal may be processed spatially prior to the calculation of the global measure $M_i$. For example, a spurious noise elimination algorithm may be used to set to zero $m_i$ values which are not zero but are surrounded by zero values. Such processes can improve the stability of the global $M_i$ measure.

Furthermore, in the embodiment previously described, the detection of gradual transitions is based on the detection of slopes in $M_i$. In alternative embodiments of the invention, the detection of gradual transitions may be based on the actual values in Mi. Thus, in an alternative embodiment, a threshold may be applied to the $M_i$ sequence, and a gradual transition will be detected when the Mi values exceed the threshold. This method can also be combined with the slope detection method of the previous embodiment.

The method described here may be applied to videos of varying spatial resolutions. In a preferred embodiment of the invention, high resolution frames will undergo some subsampling before processing, in order to accelerate the processing of the video and also to alleviate instabilities that arise from noise, compression, motion and the like. In particular, the method described here operates successfully at the DC resolution of compressed video, typical a few tens of pixels horizontally and vertically. An added advantage of this is that compressed videos need not be fully decoded to be processed; I-frames can be easily decoded at the DC level, while DC-motion compensation can be used for the other types of frames.

Furthermore, the method described here exhibits significant robustness to motion, but may be enhanced further by the introduction of a global motion compensation algorithm prior to the calculation of the inter-frame differences in order to further increase its robustness.

Although processing to detect fade and dissolve transitions has been described in the embodiment above, the embodiment may also be used to detect other types of gradual transitions having similar characteristics, such as a gradual transition caused by certain types of special effects.

In the embodiment described above, processing is performed by a programmable computer processing apparatus using processing routines defined by computer program instructions. However, some, or all, of the processing could be performed using hardware instead.

Other modifications are, of course, possible.

**Claims**

1. A method of processing a sequence of video frames to detect a gradual transition between frames, the method comprising:

   for each of a plurality of frames in the sequence, calculating a measure of the monotonicity of the direction of intensity variations between the frame and other frames in the sequence, thereby generating a temporal sequence of intensity change monotonicity measure values comprising a respective intensity change monotonicity measure value for each of the plurality of frames; and
   processing the intensity change monotonicity measure values to detect monotonicity measure values within the temporal sequence representative of a gradual transition between video frames.

2. A method according to Claim 1, wherein each of the plurality of frames is processed to calculate a measure of the monotonicity of the direction of intensity variations between the frame and other frames in the sequence by comparing the intensity values of pixels between the frames of a temporal window of frames containing the frame.

3. A method according to Claim 1 or Claim 2, wherein each of the plurality of frames is processed to calculate a measure of the monotonicity of the direction of intensity variations between the frame and other frames in the sequence by comparing the intensity values of pixels within the frames in a plurality of respective colour channels.

4. A method according to any preceding claim, wherein each of the plurality of frames is processed to calculate a measure of the monotonicity of the direction of intensity variations between the frame and other frames in the sequence by:

   comparing the intensity values of pixels within the frames to calculate differences therebetween;
   determining signs of the calculated differences; and
   processing the determined signs to generate the measure of the monotonicity of the direction of intensity variations.

5. A method according to Claim 4, wherein the sign of each calculated difference is determined by comparing the difference to an upper threshold and a lower threshold, and allocating the sign in dependence upon whether the difference is below the lower threshold, above the upper threshold or inbetween the lower and upper thresholds.

6. A method according to Claim 4 or Claim 5, wherein the measure of the monotonicity of the direction of intensity variations for each frame is generated in dependence upon the number of calculated differences of each sign.

7. A method according to Claim 6, wherein the measure of the monotonicity of the direction of intensity variations for each frame is generated in dependence upon the larger number of matching signs at each pixel position.

8. A method according to Claim 7, wherein:

   the intensity values of pixels at corresponding pixel positions within the frames of a temporal window of frames containing the frame are compared to calculate the differences therebetween; and
   the measure of the monotonicity of the direction of intensity variations is generated in dependence upon whether the larger number of matching signs for each pixel position is greater than a threshold, the threshold having a value dependent upon the number of frames in the temporal window.

9. A method according to any of claims 4 to 8, wherein the measure of the monotonicity of the direction of intensity variations for each frame is generated in further dependence upon the amounts of the differences.

10. A method according to any preceding claim, wherein the intensity change monotonicity measure values are processed to detect monotonicity measure values within the temporal sequence representative of a gradual transition between video frames by detecting a slope of the intensity change monotonicity measure values within the temporal sequence.

11. A method according to Claim 10, wherein the intensity change monotonicity measure values are processed to detect a slope of the intensity change monotonicity measure values within the temporal sequence by:

   determining the difference between adjacent monotonicity measure values in the temporal sequence to generate monotonicity differences;
   identifying a set of monotonicity differences comprising a single monotonicity difference or a plurality of consecutive monotonicity differences wherein each monotonicity difference in the set has a value above a first monotonicity difference threshold; and
   determining whether the sum of the values of the monotonicity differences in the set is above a second monotonicity difference threshold.

12. A method according to Claim 10 or Claim 11, wherein the intensity change monotonicity measure values are processed to detect a slope of the intensity change monotonicity measure values within the temporal sequence by:

   determining the difference between adjacent monotonicity measure values in the temporal sequence to generate monotonicity differences;
   identifying a set of monotonicity differences comprising a single monotonicity difference or a plurality of consecutive monotonicity differences wherein each monotonicity difference in the set has a value below a third monotonicity difference threshold; and

determining whether the sum of the values of the monotonicity differences in the set is below a fourth monotonicity difference threshold.

**13.** A method according to any preceding claim, further comprising:

determining whether or not a monochromatic frame is present within frames in the vicinity of a detected gradual transition between video frames.

**14.** Apparatus for processing a sequence of video frames to detect a gradual transition between frames, the apparatus comprising:

monitoring measure calculating means operable to calculate, for each of a plurality of frames in the sequence, a measure of the monotonicity of the direction of intensity variations between the frame and other frames in the sequence to generate a temporal sequence of intensity change monotonicity measure values comprising a respective intensity change monotonicity measure value for each of the plurality of frames; and
transition detection means operable to process the intensity change monotonicity measure values to detect monotonicity measure values within the temporal sequence representative of a gradual transition between video frames.

**15.** Apparatus according to Claim 14, wherein the monotonicity measure calculating means is operable to process each of the plurality of frames to calculate a measure of the monotonicity of the direction of intensity variations between the frame and other frames in the sequence by comparing the intensity values of pixels between the frames of a temporal window of frames containing the frame.

**16.** Apparatus according to Claim 14 or Claim 15, wherein the monotonicity measure calculating means is operable to process each of the plurality of frames to calculate a measure of the monotonicity of the direction of intensity variations between the frame and other frames in the sequence by comparing the intensity values of pixels within the frames in a plurality of respective colour channels.

**17.** Apparatus according to any of Claims 14 to 16, wherein the monotonicity measure calculating means is operable to process each of the plurality of frames to calculate a measure of the monotonicity of the direction of intensity variations between the frame and other frames in the sequence by:

comparing the intensity values of pixels within the frames to calculate differences therebetween;
determining signs of the calculated differences; and
processing the determined signs to generate the measure of the monotonicity of the direction of intensity variations.

**18.** Apparatus according to Claim 17, wherein the monotonicity measure calculating means is operable to determine the sign of each calculated difference by comparing the difference to an upper threshold and a lower threshold, and allocating the sign in dependence upon whether the difference is below the lower threshold, above the upper threshold or inbetween the lower and upper thresholds.

**19.** Apparatus according to Claim 17 or Claim 18, wherein the monotonicity measure calculating means is operable to generate the measure of the monotonicity of the direction of intensity variations for each frame in dependence upon the number of calculated differences of each sign.

**20.** Apparatus according to Claim 19, wherein the monotonicity measure calculating means is operable to generate the measure of the monotonicity of the direction of intensity variations for each frame in dependence upon the larger number of matching signs at each pixel position.

**21.** Apparatus according to Claim 20, wherein:

the monotonicity measure calculating means is operable to compare, for each of the plurality of frames, the intensity values of pixels at corresponding pixel positions within the frames of a temporal window of frames containing the frame to calculate the differences therebetween; and

the monotonicity measure calculating means is operable to generate the measure of the monotonicity of the direction of intensity variations in dependence upon whether the larger number of matching signs for each pixel position is greater than a threshold, the threshold having a value dependent upon the number of frames in the temporal window.

22. Apparatus according to any of Claims 17 to 21, wherein the monotonicity measure calculating means is operable to generate the measure of the monotonicity of the direction of intensity variations for each frame in further dependence upon the amounts of the differences.

23. Apparatus according to any of Claims 14 to 22, wherein the transition detection means comprises slope detection means operable to process the intensity change monotonicity measure values to detect a slope of the intensity change monotonicity measure values within the temporal sequence.

24. Apparatus according to Claim 23, wherein the slope detecting means is operable to process the intensity change monotonicity measure values to detect a slope of the intensity change monotonicity measure values within the temporal sequence by:

determining the difference between adjacent monotonicity measure values in the temporal sequence to generate monotonicity differences;
identifying a set of monotonicity differences comprising a single monotonicity difference or a plurality of consecutive monotonicity differences wherein each monotonicity difference in the set has a value above a first monotonicity difference threshold; and
determining whether the sum of the values of the monotonicity differences in the set is above a second monotonicity difference threshold.

25. Apparatus according to Claim 23 or Claim 24, wherein the slope detecting means is operable to process the intensity change monotonicity measure values to detect a slope of the intensity change monotonicity measure values within the temporal sequence by:

determining the difference between adjacent monotonicity measure values in the temporal sequence to generate monotonicity differences;
identifying a set of monotonicity differences comprising a single monotonicity difference or a plurality of consecutive monotonicity differences wherein each monotonicity difference in the set has a value below a third monotonicity difference threshold; and
determining whether the sum of the values of the monotonicity differences in the set is below a fourth monotonicity difference threshold.

26. Apparatus according to any of Claims 14 to 25, further comprising:

monochromatic frame detecting means operable to determine whether or not a monochromatic frame is present within frames in the vicinity of a detected gradual transition between video frames.

27. A storage medium storing computer program instructions to program a programmable processing apparatus to become operable to perform a method as set out in at least one of Claims 1 to 13.

28. A signal carrying computer program instructions to program a programmable processing apparatus to become operable to perform a method as set out in at least one of Claims 1 to 13.

FIG. 1

$f^c_i(x,y)$

$f^c_{i-1}(x,y)$ → | Difference | — S10

↓ $d^c_i(x,y)$

| Sign | — S12

↓ $s^c_i(x,y)$

S14 — | Count positive changes |    $s^c_{i-w+1}(x,y)$ ... $s^c_{i+w}(x,y)$    | Count negative changes | — S16

$p^c_i(x,y)$    $n^c_i(x,y)$

| Max function | — S18

↓ $u^c_i(x,y)$

| Calculate local monotonicity measure | — S20

↓ $m^c_i(x,y)$

| Calculate global monotonicity measure | — S22

↓ $M_i$

# FIG. 2

FIG. 3

**FIG. 4**

FIG. 5

**European Patent Office**

## EUROPEAN SEARCH REPORT

Application Number

EP 06 02 1734

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 459 459 B1 (RATAKONDA KRISHNA [US]) 1 October 2002 (2002-10-01) * abstract * * column 2, line 40 - line 46 * * column 4, line 14 - line 36 * * column 6, line 40 - line 50 * ----- | 1,14,27, 28 | INV. H04N7/26 |
| A | US 7 110 454 B1 (CHAKRABORTY AMIT [US]) 19 September 2006 (2006-09-19) * abstract * * column 3, line 25 - line 29 * * column 6, line 64 - column 7, line 6 * ----- | 1-28 | |

TECHNICAL FIELDS SEARCHED (IPC)

H04N
G11B

The present search report has been drawn up for all claims

| Place of search | Date of completion of the search | Examiner |
|---|---|---|
| Munich | 8 January 2007 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 02 1734

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2007

| Patent document cited in search report | | Publication date | Patent family member(s) | | Publication date |
|---|---|---|---|---|---|
| US 6459459 | B1 | 01-10-2002 | DE | 69918533 D1 | 12-08-2004 |
| | | | DE | 69918533 T2 | 25-08-2005 |
| | | | EP | 1053635 A1 | 22-11-2000 |
| | | | WO | 9935825 A1 | 15-07-1999 |
| | | | JP | 3714871 B2 | 09-11-2005 |
| | | | JP | 2002501341 T | 15-01-2002 |
| US 7110454 | B1 | 19-09-2006 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1640914 A2
- EP 1640913 A1
- US 5990980 A

- US 6327390 B1
- US 20010021267 A1

**Non-patent literature cited in the description**

- **TRUONG, B. T ; DORAI, C ; VENKATESH, S.** New Enhancements to Cut, Fade and Dissolve Processes in Video Segmentation. *Proceedings of the 2000 8th ACM International Conference on Multimedia,* November 2000, 219-227